# EUROPÄISCHE PATENTSCHRIFT

(11) **EP 4 128 658 B1**
(45) Veröffentlichungstag und Bekanntmachung des Hinweises auf die Patenterteilung: **14.08.2024**
(21) Anmeldenummer: 22721752.8
(22) Anmeldetag: 08.04.2022
(51) Int. Cl.: H04L 9/40, H04L 9/32, H04L 9/08, H02S 99/00

(54) **VERFAHREN ZUM LOGIN EINES AUTORISIERTEN NUTZERS AUF EIN GERÄT, INSBESONDERE AUF EIN GERÄT FÜR EINE ENERGIEERZEUGUNGSANLAGE**
METHOD FOR LOGGING AN AUTHORISED USER IN TO A DEVICE, IN PARTICULAR TO A DEVICE FOR A POWER GENERATION PLANT
PROCÉDÉ DE CONNEXION D'UN UTILISATEUR AUTORISÉ À UN APPAREIL, EN PARTICULIER À UN APPAREIL DESTINÉ À UNE INSTALLATION DE PRODUCTION D'ÉNERGIE

(30) Priorität: 13.04.2021 DE 102021109253
(43) Veröffentlichungstag der Anmeldung: 08.02.2023
(73) Patentinhaber: SMA Solar Technology AG, 34266 Niestetal (DE)
(72) Erfinder: BOERGER, Stefan, 34128 Kassel (DE); HANKE, Ingo, 37073 Göttingen (DE); KLEIN, Jens, 37075 Göttingen (DE); SCHLOTE, Dirk, 34121 Kassel (DE); SEEGER, Marek, 37120 Bovenden (DE); THIEL, Raimund, 34596 Bad Zwesten (DE); WISCHER, Mirko, 36251 Bad Hersfeld (DE)
(86) Internationale Anmeldenummer: PCT/EP2022/059483
(87) Internationale Veröffentlichungsnummer: WO 2022/218868

(56) Entgegenhaltungen:
- WO-A1-2019/070475
- US-A1- 2017 363 065

## Beschreibung

Die Anmeldung betrifft ein Verfahren zum Login eines autorisierten Nutzers auf ein Gerät, insbesondere auf ein Gerät für eine Energieerzeugungsanlage, und eine Energieerzeugungsanlage.

Energieerzeugungsanlagen können Kommunikationsschnittstellen aufweisen, die einen Fernzugriff über Datenverbindungen, z. B. über das Internet, auf Geräte der Energieerzeugungsanlage ermöglichen. Solche Datenverbindungen können z. B. von Service-Technikern der Energieerzeugungsanlage genutzt werden, um z. B. Fernwartungen an der Energieerzeugungsanlage durchzuführen.

Das SRP-Protokoll (SRP: Secure Remote Password) betrifft ein Authentifizierungs- und Schlüsseleinigungsverfahren, bei dem sich ein Kommunikationspartner bei einem anderen authentifiziert. Die Schlüsseleinigung der Kommunikationspartner betrifft einen sogenannten Sessionkey, der eine Kommunikationssitzung (engl. session) zwischen den Kommunikationspartnern absichert. Der Sessionkey selbst wird dabei nicht zwischen den Kommunikationspartnern übertragen.

Das Dokument DE10 2006 007 793 B3 offenbart hierbei ein Zugriffsverfahren für einen Nutzer, bei dem eine Authentifizierung des Nutzers über eine Umleitung zu einem Gateway erfolgt, welches den Nutzer nach erfolgter Authentifizierung an das Zielgerät weiterleitet. Weiterhin zeigt das Dokument DE 10 2019 131 745 A1 ein Verfahren zum sicheren Verbindungsaufbau zwischen einem Mikrocontroller und einem Netzwerkcomputer durch die Verwendung digitaler Zertifikate.

Auch in der Schrift WO2019/070475 A1 werden die Login-Daten für den Zugriff auf Geräte in einem Firmennetzwerk zentral in einem Service-Gateway verwaltet und übernimmt die Aufgabe der Authentifikation eines Nutzers an einem Gerät des Firmennetzwerks und vermittelt die anschließende Kommunikation zwischen beiden.

Weiterhin offenbart das Dokument US 2017/0363065 A1 ein Zugriffsverfahren für einen Nutzer auf eine Windturbine eines Windkraftwerks, wobei der Nutzer eine Zugriffsanfrage an ein Zertifizierungszentrum stellt. Das Zertifzierungszentrum erstellt nach Prüfung der Anfrage ein zeitlich befristetes Zertifikat für den angefragten Zugriff und übermittelt dies an den Nutzer, um diesem den angefragten Zugriff zu ermöglichen.

Aufgabe der Erfindung ist, den Zugriff, insbesondere den Fernzugriff, über Datenverbindungen auf ein Gerät, insbesondere ein Gerät für eine Energieerzeugungsanlage, abzusichern.

Die Aufgabe wird durch ein Verfahren mit den Merkmalen des Patentanspruchs 1 gelöst. Bevorzugte Ausführungsformen sind in den abhängigen Patentansprüchen angegeben.

Bei einem Verfahren zum Login eines autorisierten Nutzers auf ein Gerät, insbesondere auf ein Gerät für eine Energieerzeugungsanlage, mittels eines Service-Gateways ist eine Zugriffsberechtigung des Nutzers für das Gerät auf dem Service-Gateway hinterlegt. Das Verfahren umfasst die Schritte:
- Authentifizierung des Nutzers am Service-Gateway.
- Geräte-Zugriffsanfrage des Nutzers an das Service-Gateway unter Angabe einer Kennung des Geräts.
- Abgleich eines auf dem Service-Gateway hinterlegten Gerätegeheimnisses mit einem auf dem Gerät hinterlegten Abbild des Gerätegeheimnisses, über ein SRP-Protokoll. Der Abgleich erfolgt über eine Datenverbindung zwischen einem Zugangsgerät des Nutzers und dem Service-Gateway, sowie über eine Datenverbindung zwischen dem Zugangsgerät des Nutzers und dem Gerät.
- Bei erfolgreichem Abgleich wird im Rahmen des SRP-Protokolls ein Sessionkey zwischen Gerät und Service-Gateway vereinbart und
- es erfolgt ein Login des Nutzers am Gerät.

Gegenüber einem Verfahren mit einem SRP-Protokoll mit genau zwei Kommunikationspartnern wird vorliegend das Verfahren mit drei Kommunikationspartnern realisiert: Gerät, Service-Gateway und Zugangsgerät des Nutzers.

Mit dem Verfahren kann einer Person, beispielsweise einem Service-Techniker, ein manipulationssicherer Zugriff auf ein Gerät durch Login auf einen Service-Gateway ermöglicht werden, auf dem das Gerät, bevorzugt neben einer Vielzahl anderer Geräte, registriert ist. Dies ist möglich, ohne eine individuelle Authentifizierung des Nutzers direkt am Gerät, zum Beispiel durch gerätespezifische Login-Daten, durchführen zu müssen. Außerdem ist es möglich, das Verfahren ohne direkte Verbindung zwischen Service-Gateway und Gerät durchzuführen. Dabei ist es möglich, dass auf dem Service-Gateway eine Vielzahl von Geräten registriert sind. Hierbei werden keine Daten ausgetauscht, die später einem nicht berechtigten Nutzer einen Zugriff auf das Gerät erlauben oder erleichtern. Für den Fall eines Gerätes für eine Energieerzeugungsanlage kann das Gerät z. B. eine Steuerung oder ein Wechselrichter der Energieerzeugungsanlage sein und das Service-Gateway vom Betreiber der Energieerzeugungsanlage und/oder dem Hersteller der Steuerung oder des Wechselrichters und/oder einem Dienstleister, der z. B. eine Fernwartung anbietet, zur Verfügung gestellt werden.

Insbesondere können Manipulationen unter anderem durch folgende Angriffsvarianten unterbunden werden:
- Abhören der Datenkommunikation
- Abändern der übertragenen Daten
- Wiederholtes Abspielen aufgezeichneter Daten
- Vortäuschen gefälschter Identität von Kommunikationspartnern durch gesammelte Daten
- Missbrauch gesammelter Daten, auch während zulässiger Nutzung, durch den Nutzer.

Das SRP-Protokoll ermöglicht dabei die sichere Vereinbarung, insbesondere gemeinsame Erzeugung, des Sessionkeys, nachdem das Service-Gateway den Besitz eines Gerätegeheimnisses gegenüber dem Gerät, das im Besitz eines Abbilds eines Gerätegeheimnisses ist, nachgewiesen hat. Durch diesen Nachweis des Besitzes des Gerätegeheimnisses ist es möglich, das Service-Gateway zumindest einseitig am Gerät zu authentifizieren. Es ist denkbar, aber nicht notwendig, dass auch das Gerät den Besitz des Abbilds des Gerätegeheimnis gegenüber dem Service-Gateway nachweist. Im Rahmen des Abgleichs werden vielmehr nur Anfragen und Antworten auf die Anfragen ausgetauscht, aus denen zumindest das Gerät erkennen kann, dass das Service-Gateway im Besitz des Gerätegeheimnisses ist. Aus den ausgetauschten Informationen kann hierbei nicht auf das Gerätegeheimnis beziehungsweise dessen Abbild zurückgeschlossen werden.

Weiterhin werden bei der Vereinbarung eines Sessionkeys ebenso weder der vereinbarte Sessionkey noch Teile davon übertragen. Stattdessen werden zur Vereinbarung des Sessionkeys nur Informationen darüber ausgetauscht, wie der Sessionkey erzeugt werden soll, beispielsweise durch Bezugnahme auf Inhalte des Gerätegeheimnisses beziehungsweise dessen Abbilds, Erzeugt wird der Sessionkey dann ergebnisgleich unabhängig voneinander auf dem Gerät und dem Service-Gateway. Besitznachweis der Geheimnisse und Vereinbarung des Sessionkeys können nacheinander oder auch gemeinsam erfolgen.

Das Gerätegeheimnis existiert bevorzugt nur einmal auf dem Service-Gateway. Es wird dazu verwendet, ein - bevorzugt gerätespezifisches - Abbild des Gerätegeheimnisses zu erzeugen, das dann auf dem Gerät abgelegt wird. Es wird so ermöglicht, dass im Rahmen des SRP-Protokolls selbst bei Kompromittierung des Abbilds sich niemand fälschlich als Service-Gateway gegenüber dem Gerät ausgeben kann. Das Gerätegeheimnis-Abbild wird durch ein mathematisches Verfahren eindeutig aus dem Gerätegeheimnis erzeugt, wobei das Gerätegeheimnis durch kein bekanntes mathematisches Verfahren aus dem Gerätegeheimnis-Abbild abgeleitet werden kann. Im Rahmen des SRP-Protokolls kann der Besitzer des Abbilds dennoch prüfen, ob der Kommunikationspartner auch im Besitz des das Abbild erzeugenden Gerätegeheimnisses ist, ohne dass der Besitzer des Abbildes dieses Geräte-Geheimnis selbst kennen muss. Es ist aber auch nicht ausgeschlossen, dass das Abbild eine exakte Kopie des Gerätegeheimnisses ist, auch wenn dies die Sicherheit des Verfahrens reduziert.

Der Sessionkey ist bevorzugt Basis einer symmetrischen Verschlüsselung, bei der der Sessionkey sowohl zur Verschlüsselung als auch zur Entschlüsselung dient. Es sind ebenfalls andere Arten der Absicherungen der Sitzung zwischen Gerät und Service-Gateway unter Verwendung des Sessionkeys denkbar.

Es ist auch denkbar, dass der Sessionkey Informationen über den Umfang der Zugriffsberechtigung des Nutzers enthält. Ein Zugriff über den vereinbarten Sessionkey kann dann entsprechend der darin enthaltenen Zugriffsberechtigungsinformation begrenzt werden. Dies ermöglicht eine Verwaltung der Nutzerrechte für das Gerät über das Service-Gateway. Die Information kann im Rahmen des SRP-Protokolls in den ausgehandelten Sessionkey integriert werden, beispielsweise indem Sessionkeys zu unterschiedlichen Nutzerrechtsmodellen ausgehandelt werden, aber nur der zu der Zugriffsberechtigung des Nutzers passende Sessionkey vom Service-Gateway an den Nutzer übertragen wird. Alternativ kann selbstverständlich eine Verwaltung von Nutzerrechten auch auf dem Gerät erfolgen.

Bevorzugt befinden sich das Gerät, das Service-Gateway sowie das Zugangsgerät des Nutzers an voneinander entfernten Orten. Durch das Verfahren kann also ein Fernzugang des Nutzers zum Gerät unter Verwendung des Service-Gateways geschaffen werden.

Es kann aber auch zur Erhöhung der Sicherheit gefordert werden, dass die Datenverbindung zwischen Nutzer und Gerät über eine Verbindung von räumlich stark begrenzter Reichweite erfolgt, beispielsweise über eine Funkverbindung wie NFC (Near Field Communication), Bluetooth oder Zigbee.

In einer Ausführungsform umfasst das Verfahren außerdem die Schritte:
- Übertragung des Sessionkeys vom Service-Gateway an das Zugangsgerät des Nutzers, bevorzugt über ein verschlüsselte und authentifizierte Kommunikationsverbindung, sofern eine Autorisierung des Nutzers auf dem Service-Gateway hinterlegt ist, und
- Zugriff des Nutzers auf das Gerät unter Verwendung des Sessionkeys.

Somit wird nach Abschluss der Autorisierung und Authentifikation der Sessionkey vom Service-Gateway an das Zugangsgerät des Nutzers übertragen. Die nachfolgende weitere Kommunikation erfolgt direkt zwischen Zugangsgerät des Nutzers und dem Gerät unter Nutzung des Sessionkeys.

Die Autorisierung des Nutzers auf dem Service-Gateway kann z. B. auf Basis von Merkmalen des Zugangsgerätes des Nutzers, insbesondere von Geräte-Seriennummern, Gerätetypen oder weiteren Merkmalen bestimmt werden. Eine Registrierung neuer Nutzer oder neuer Zugangsgeräte auf dem Service-Gateway und die Erteilung von Zugriffsrechten für z. B. Geräte kann z. B. nach dem 4-Augen-Prinzip erfolgen.

In einer Ausführungsform des Verfahrens bestimmt der Nutzer die Kennung des Geräts durch Abfrage an dem Gerät über die Datenverbindung zwischen dem Zugangsgerät des Nutzers und dem Gerät.

In einer Ausführungsform des Verfahrens ist das Gerätegeheimnis in der Datenbank des Service-Gateways hinterlegt. Es ist möglich, das Abbild des Gerätegeheimnisses im Rahmen der Fertigung des Geräts zu erzeugen und das Abbild des Gerätegeheimnisses auf dem Gerät und das Gerätegeheimnis selbst in der Datenbank des Service-Gateways zu hinterlegen. Alternativ oder zusätzlich ist es möglich, das Abbild des Gerätegeheimnisses im Rahmen eines Software-Updates des Geräts aus einem im Service-Gateway hinterlegten Gerätegeheimnis zu erzeugen und das Abbild des Gerätegeheimnisses auf dem Gerät und das Gerätegeheimnis selbst in dem Service-Gateway, insbesondere in der Datenbank des Service-Gateways, zu hinterlegen.

In einer Ausführungsform umfasst die Authentifizierung des Nutzers am Service-Gateway eine Prüfung, ob die Anzahl der erfolgten Zugriffsanfragen in einem gegebenen Zeitraum eine Maximalanzahl überschreitet. Alternativ oder zusätzlich umfasst die Authentifizierung des Nutzers am Service-Gateway eine 2-Faktor-Authentifizierung des Nutzers. Ein Login und alle weiteren Aktivitäten des Nutzers auf dem Gerät und/oder dem Service-Gateway im Rahmen der Authentifizierung und Autorisierung können protokolliert und überwacht werden. Die Anzahl erlaubter Authentifizierungen des Nutzers am Gerät kann bezogen auf Zeitabschnitte, z. B. Tag, Monat, Jahr, begrenzt werden.

In einer Ausführungsform des Verfahrens erfolgt die Datenverbindung zwischen dem Zugangsgerät des Nutzers und dem Service-Gateway und/oder die Datenverbindung zwischen dem Zugangsgerät des Nutzers und dem Gerät über eine verschlüsselte und authentifizierte TLS-Verbindung unter Einsatz einer Perfect Forward Secrecy zusichernden Cipher-Suite. Hierdurch wird die Sicherheit des Verfahrens weiter verbessert.

In einer Ausführungsform des Verfahrens ist das Gerät ein Gerät für eine Energieerzeugungsanlage, insbesondere eine Steuerung und/oder ein Wechselrichter der Energieerzeugungsanlage. Für ein solches Gerät kann das Verfahren nach erfolgreichem Login des Nutzers am Gerät die folgenden Schritte umfassen:
- Auslesen von historischen Daten der Energieerzeugung der Energieerzeugungsanlage,
- Auslesen von Parametern der Energieerzeugung der Energieerzeugungsanlage und/oder
- Änderung von Parametern der Energieerzeugung der Energieerzeugungsanlage.

In einer Ausführungsform des Verfahrens erfolgt die Änderung der Parameter in Abhängigkeit von den historischen Daten. Hierdurch können die Parameter z. B. an örtliche Gegebenheiten der Energieerzeugungsanlage angepasst werden, welche aus den historischen Daten gewonnen werden können.

In einer Ausführungsform des Verfahrens erfolgt die Änderungen der Parameter in Abhängigkeit von Daten, die vom Gerät über die Datenverbindung zwischen dem Zugangsgerät des Nutzers und dem Gerät empfangen werden. Hierdurch können die Parameter z. B. vom Betreiber der Energieerzeugungsanlage von außen eingestellt werden.

In einer Ausführungsform des Verfahrens werden die historischen Daten vom Gerät über die Datenverbindung zwischen dem Zugangsgerät des Nutzers und dem Gerät übermittelt. Hierdurch kann es z. B. dem Betreiber der Energieerzeugungsanlage ermöglicht werden, historische Daten zentral zusammenzuführen.

Eine nicht erfindungsgemäße Energieerzeugungsanlage weist ein Gerät auf, auf welchem ein Abbild eines Gerätegeheimnisses hinterlegt ist, wobei das Abbild des Gerätegeheimnisses unter Verwendung eines Gerätegeheimnisses erzeugt wurde. Das Gerät ist dabei eingerichtet und ausgebildet, über ein SRP-Protokoll den Abgleich des auf dem Gerät hinterlegten Abbildes des Gerätegeheimnisses mit einem entfernt hinterlegten Gerätegeheimnis durchzuführen, wobei das Gerät ausgebildet ist, bei erfolgreichem Abgleich im Rahmen des SRP-Protokolls ein Login eines Nutzers am Gerät durchzuführen.

Im Folgenden wird die Erfindung mithilfe von Figuren dargestellt, von denen
- Fig. 1: eine Ausführungsform eines Verfahrens zum Zugriff eines autorisierten Nutzers auf ein Gerät und
- Fig. 2: schematisch Kommunikationsbeziehungen zwischen Kommunikationspartnern zur Umsetzung eines Zugriffsverfahrens zeigt.

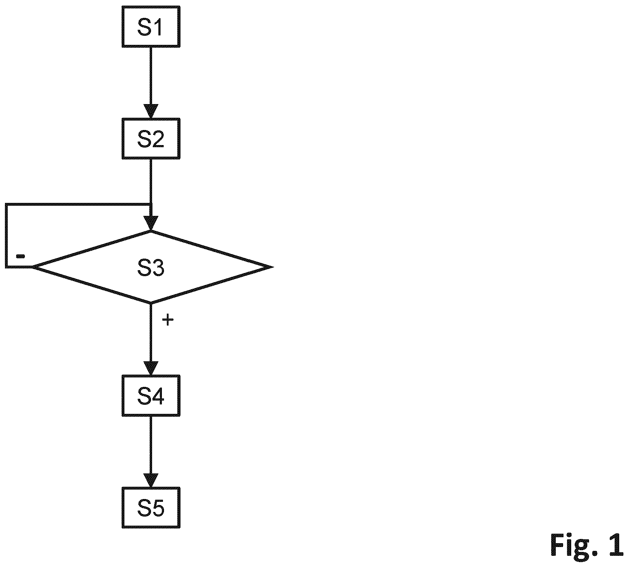

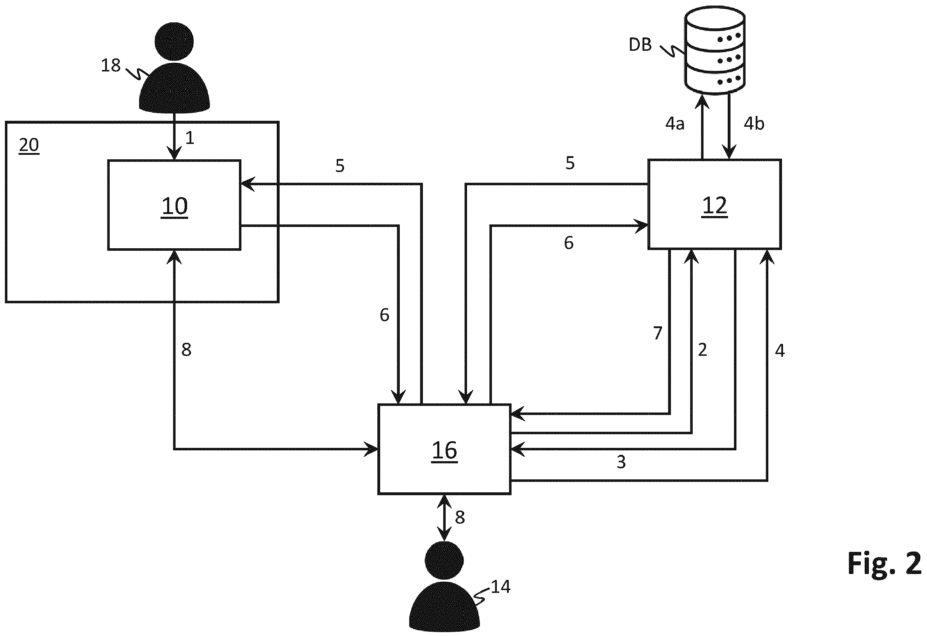

In Fig. 1 ist, unter Verwendung der Bezugszeichen von Fig. 2, ein Ausführungsbeispiel eines Verfahrens zum Login eines autorisierten Nutzers 14 auf ein Gerät 10 gezeigt. Das Verfahren erfolgt mittels eines Service-Gateways 12, auf dem eine Zugriffsberechtigung des Nutzers 14 für das Gerät 10 hinterlegt ist. Das Verfahren weist die folgenden Schritte auf:
S1) Authentifizierung des Nutzers 14 am Service-Gateway 12;
S2) Geräte-Zugriffsanfrage des Nutzers 14 an das Service-Gateway 12 unter Angabe einer Kennung des Geräts 10;
S3) Abgleich eines auf dem Service-Gateway 12 hinterlegten Gerätegeheimnisses mit einem auf dem Gerät 10 hinterlegten, unter Verwendung des Gerätegeheimnisses erzeugten Abbilds des Gerätegeheimnisses, über ein SRP-Protokoll, wobei der Abgleich über eine Datenverbindung zwischen einem Zugangsgerät 16 des Nutzers 14 und dem Service-Gateway 12, sowie einer Datenverbindung zwischen dem Zugangsgerät 16 des Nutzers 14 und dem Gerät 10 erfolgt:
   Nach erfolgreichem Abgleich (Pfad "+") erfolgen die Schritte S4) und S5):
   S4) Vereinbaren eines Sessionkeys zwischen Gerät 10 und Service-Gateway 12 und
   S5) Login des Nutzers 14 am Gerät 10 im Rahmen des SRP-Protokolls.

Dabei werden entsprechend des SRP-Protokolls das Gerätegeheimnis oder das Abbild des Gerätegeheimnisses nicht über die Datenverbindungen übertragen, sondern nur Prüffragen zwischen Gerät 10 und Service-Gateway 12 ausgetauscht und beantwortet. Dies entspricht einem sogenannten "Zero-Knowledge Verfahren".

Das Gerätegeheimnis kann z. B in eine Datenbank DB des Service-Gateways 12 hinterlegt sein. Es ist möglich, das Abbild des Gerätegeheimnisses im Rahmen der Fertigung des Geräts 10 zu erzeugen und das Abbild des Gerätegeheimnisses auf dem Gerät 10 und das Gerätegeheimnis selbst in der Datenbank DB des Service-Gateways zu hinterlegen. Alternativ oder zusätzlich ist es möglich, das Abbild des Gerätegeheimnisses im Rahmen eines Software-Updates des Geräts 10 aus einem Gerätegeheimnis zu erzeugen und das Abbild des Gerätegeheimnisses auf dem Gerät 10 und das Gerätegeheimnis selbst in dem Service-Gateway 12, insbesondere in der Datenbank DB des Service-Gateways 12, zu hinterlegen. Das Gerätegeheimnis kann hierbei individuell für jedes Gerät erzeugt und in der Datenbank DB hinterlegt werden, oder es wird für eine Vielzahl von Geräten oder auch für alle Geräte das gleiche Gerätegeheimnis in der Datenbank DB hinterlegt und verwendet. Bei der Verwendung des gleichen Gerätegeheimnisses für mehrere Geräte kann stattdessen die Erzeugung des Abbilds des Gerätegeheimnis individualisiert werden.

In Fig. 2 sind ein Gerät 10, ein Service-Gateway 12 und ein Nutzer 14 dargestellt. Der Nutzer 14 baut über ein Zugangsgerät 16 Datenverbindungen, z. B. über das Internet, auf. Das Gerät 10 ist Bestandteil einer Energieerzeugungsanlage 20, die von einem Betreiber betrieben wird. Eine Person 18, die z. B. der Betreiber der Energieerzeugungsanlage 20 oder der Besitzer der Energieerzeugungsanlage sein kann, erteilt mit dem Vorgang 1 eine Zugriffserlaubnis, also Autorisierung, für einen Nutzer 14 auf das Gerät 10. Der Nutzer 14 wird damit zum autorisierten Nutzer 14.

Mit dem Vorgang 2 erfolgt eine Authentifizierung, bevorzugt eine 2-Faktor-Authentifizierung, des Nutzers 14 am Service-Gateway 12. Mit Vorgang 3 erfolgt eine Prüfung der Anmeldedaten, also der Authentifizierung, durch das Service-Gateway 12 und im Falle einer Bestätigung eine positive Rückmeldung an das Zugangsgerät 16 des Nutzers 14. Schritt S1) von Fig. 1 kann damit die Vorgänge 1, 2 und 3 aufweisen.

Mit dem Vorgang 4 fragt der Nutzer 14 beim Service-Gateway 12 an, auf ein Gerät 10 zuzugreifen. Dabei kann das Gerät 10 z. B. anhand der Seriennummer identifiziert werden. Das Service-Gateway 12 prüft die Autorisierung des Nutzers 14, auf das Gerät 10 zuzugreifen. Der Vorgang 4 entspricht damit dem Schritt S2) von Fig. 1.

In einem Vorgang 4a fragt das Service-Gateway 12 das Gerätegeheimnis in der Datenbank DB, z. B. mit der Seriennummer des Gerätes 10 an. Im Vorgang 4b erfolgt Rücksendung des Gerätegeheimnisses von der Datenbank DB an das Service-Gateway 12.

Im Vorgang 5 wird das Service-Gateway 12 am Gerät 10 mit dem SRP-Protokoll authentifiziert. Hierbei wird das Gerätegeheimnis geprüft, d. h. es wird anhand des Abbilds des Gerätegeheimnisses im Gerät geprüft, ob im Service Gateway 12 das Gerätegeheimnis vorliegt. Wie in Fig. 2 dargestellt, erfolgt die Authentifizierung über eine zweistufige Kommunikation, Service-Gateway 12 zu Zugangsgerät 16 und Zugangsgerät 16 zu Gerät 10. Der Vorgang 5 entspricht damit dem Schritt S3) von Fig. 1.

Im Falle einer Bestätigung wird im Vorgang 6 der Sessionkey ausgehandelt. Wie in Fig. 2 dargestellt, erfolgt dieses Aushandeln über eine zweistufige Kommunikation, Gerät 10 zu Zugangsgerät 16 und Zugangsgerät 16 zu Service-Gateway 12. Die Berechnung des Sessionkey erfolgt dabei zugleich im Gerät wie im Service-Gateway. Der Sessionkey wird nicht übertragen. Der Vorgang 6 entspricht damit dem Schritt S4) von Fig. 1.

Im Vorgang 7 wird der Sessionkey an das Zugangsgerät 16 des Nutzers 14 übertragen. Mit Vorgang 8 ist die weitere Kommunikation direkt zwischen dem Zugangsgerät 16 des Nutzers 14 und Gerät 10 unter Verwendung des Sessionkeys bezeichnet. Schritt S5) von Fig. 1 kann damit die Vorgänge 7 und 8 aufweisen.

### Bezugszeichenliste

- 1, 2, 3, 4, 4a, 4b, 5, 6, 7, 8: Vorgänge
- 10: Gerät
- 12: Service-Gateway
- 14: Nutzer
- 16: Zugangsgerät
- 18: Person
- 20: Energieerzeugungsanlage
- DB: Datenbank
- S1, S2, S3, S4, S5: Verfahrensschritte

## Patentansprüche

1. Verfahren zum Login eines autorisierten Nutzers (14) auf ein Gerät (10), insbesondere auf ein Gerät für eine Energieerzeugungsanlage (20), mittels eines Service-Gateways (12), wobei eine Zugriffsberechtigung des Nutzers (14) für das Gerät (10) auf dem Service-Gateway (12) hinterlegt ist, umfassend die Schritte:
- Authentifizierung des Nutzers (14) am Service-Gateway (12),
- Geräte-Zugriffsanfrage des Nutzers (14) an das Service-Gateway (12) unter Angabe einer Kennung des Geräts (10),
- Abgleich eines auf dem Service-Gateway (12) hinterlegten Gerätegeheimnisses mit einem auf dem Gerät (10) hinterlegten, unter Verwendung des Gerätegeheimnisses erzeugten Abbilds des Gerätegeheimnisses, über ein SRP-Protokoll, wobei der Abgleich über eine Datenverbindung zwischen einem Zugangsgerät (16) des Nutzers (14) und dem Service-Gateway (12), sowie einer Datenverbindung zwischen dem Zugangsgerät (16) des Nutzers (14) und dem Gerät (10) erfolgt,
- wobei bei erfolgreichem Abgleich im Rahmen des SRP-Protokolls ein Sessionkey zwischen Gerät (10) und Service-Gateway (12) vereinbart wird und
- ein Login des Nutzers (14) am Gerät (10) erfolgt.

2. Verfahren nach Anspruch 1, weiterhin umfassend:
- Übertragung des Sessionkeys vom Service-Gateway (12) an das Zugangsgerät (16) des Nutzers (14), sofern eine Autorisierung des Nutzers (14) auf dem Service-Gateway (12) hinterlegt ist, und
- Zugriff des Nutzers (14) auf das Gerät (10) unter Verwendung des Sessionkeys.

3. Verfahren nach Anspruch 1 oder 2, wobei der Nutzer (14) die Kennung des Geräts (10) durch Abfrage an dem Gerät (10) über die Datenverbindung zwischen dem Zugangsgerät (16) des Nutzers (14) und dem Gerät (10) bestimmt.

4. Verfahren nach einem der vorhergehenden Ansprüche, wobei eine Übertragung des vereinbarten Sessionkeys zwischen Service-Gateway (12) und Gerät (10) vermieden wird.

5. Verfahren nach einem der vorhergehenden Ansprüche, wobei das Abbild des Gerätegeheimnisses im Rahmen der Fertigung des Geräts (10) erzeugt und auf dem Gerät (10) hinterlegt wird, wobei das Gerätegeheimnis in der Datenbank (DB) des Service-Gateways (12) hinterlegt ist.

6. Verfahren nach einem der vorhergehenden Ansprüche, wobei das Abbild des Gerätegeheimnisses im Rahmen eines Software-Updates des Geräts (10) aus einem im Service-Gateway (12) , neu erzeugten Gerätegeheimnis erzeugt und wobei das Abbild des neu erzeugten Gerätegeheimnisses auf dem Gerät (10) und das neu erzeugte Gerätegeheimnis selbst in dem Service-Gateway (12), insbesondere in der Datenbank (DB) des Service-Gateways (12), hinterlegt wird.

7. Verfahren nach einem der vorhergehenden Ansprüche, wobei die Authentifizierung des Nutzers (14) eine Prüfung umfasst, ob die Anzahl der erfolgten Zugriffsanfragen in einem gegebenen Zeitraum eine Maximalanzahl überschreitet.

8. Verfahren nach einem der vorhergehenden Ansprüche, wobei die Authentifizierung des Nutzers (14) am Service-Gateway (12) eine 2-Faktor-Authentifizierung des Nutzers (14) umfasst.

9. Verfahren nach einem der vorhergehenden Ansprüche, wobei die Datenverbindung zwischen dem Zugangsgerät (16) des Nutzers (14) und dem Service-Gateway (12) und/oder die Datenverbindung zwischen dem Zugangsgerät (16) des Nutzers (14) und dem Gerät (10) über eine verschlüsselte und authentifizierte TLS-Verbindung unter Einsatz einer Perfect Forward Secrecy zusichernden Cipher-Suite erfolgt.

10. Verfahren nach einem der vorhergehenden Ansprüche, wobei das Gerät (10) ein Gerät (10) für eine Energieerzeugungsanlage (20) ist.

11. Verfahren nach Anspruch 10, wobei das Verfahren nach erfolgreichem Login des Nutzers (14) am Gerät (10) die folgenden Schritte umfasst:
- Auslesen von historischen Daten der Energieerzeugung der Energieerzeugungsanlage (20)
- Auslesen von Parametern der Energieerzeugung der Energieerzeugungsanlage (20) und/oder
- Änderung von Parametern der Energieerzeugung der Energieerzeugungsanlage (20).

12. Verfahren nach Anspruch 11, wobei die Änderung der Parameter in Abhängigkeit von den historischen Daten erfolgt.

13. Verfahren nach Anspruch 11 oder 12, wobei die Änderungen der Parameter in Abhängigkeit von Daten erfolgt, die vom Gerät (10) über die Datenverbindung zwischen dem Zugangsgerät (16) des Nutzers (14) und dem Gerät (10) empfangen werden.

14. Verfahren nach Anspruch 11, 12 oder 13, wobei die historischen Daten vom Gerät (10) über die Datenverbindung zwischen dem Zugangsgerät (16) des Nutzers (14) und dem Gerät (10) übermittelt werden.

## Claims

1. A method for logging an authorized user (14) in to a device (10), in particular to a device for a power generation plant (20), by means of a service gateway (12), wherein an access authorization of the user (14) for the device (10) is stored on the service gateway (12), comprising the steps of:
- authenticating the user (14) on the service gateway (12),
- sending the device access request of the user (14) to the service gateway (12) specifying an identifier of the device (10),
- comparing a device secret stored on the service gateway (12) with a copy of the device secret generated using the device secret and stored on the device (10), via an SRP protocol, wherein the comparison is carried out via a data connection between an access device (16) of the user (14) and the service gateway (12), and a data connection between the access device (16) of the user (14) and the device (10),
- wherein, if the comparison is successful, a session key is agreed between the device (10) and the service gateway (12) via the SRP protocol, and
- the user (14) logs in to the device (10).

2. The method as claimed in claim 1, further comprising:
- transmitting the session key from the service gateway (12) to the access device (16) of the user (14), insofar as an authorization of the user (14) is stored on the service gateway (12), and
- the user (14) accessing the device (10) using the session key.

3. The method as claimed in claim 1 or 2, wherein the user (14) determines the identifier of the device (10) by means of a query on the device (10) via the data connection between the access device (16) of the user (14) and the device (10).

4. The method as claimed in one of the preceding claims, wherein a transmission of the agreed session key between the service gateway (12) and the device (10) is avoided.

5. The method as claimed in one of the preceding claims, wherein the copy of the device secret is generated during the manufacture of the device (10) and is stored on the device (10), wherein the device secret is stored in the database (DB) of the service gateway (12).

6. The method as claimed in one of the preceding claims, wherein the copy of the device secret is generated during a software update of the device (10) from a device secret newly generated in the service gateway (12), and wherein the copy of the newly generated device secret is stored on the device (10) and the newly generated device secret itself is stored in the service gateway (12), particularly in the database (DB) of the service gateway (12).

7. The method as claimed in one of the preceding claims, wherein the authentication of the user (14) comprises a check to determine whether the number of access requests made in a given time period exceeds a maximum number.

8. The method as claimed in one of the preceding claims, wherein the authentication of the user (14) on the service gateway (12) comprises a two-factor authentication of the user (14).

9. The method as claimed in one of the preceding claims, wherein the data connection between the access device (16) of the user (14) and the service gateway (12) and/or the data connection between the access device (16) of the user (14) and the device (10) is set up via an encrypted and authenticated TLS connection using a cipher suite ensuring Perfect Forward Secrecy.

10. The method as claimed in one of the preceding claims, wherein the device (10) is a device (10) for a power generation plant (20).

11. The method as claimed in claim 10, wherein the method, following successful login of the user (14) on the device (10), comprises the following steps:
- reading historical data of the power generation of the power generation plant (20),
- reading parameters of the power generation of the power generation plant (20), and/or
- modifying parameters of the power generation of the power generation plant (20).

12. The method as claimed in claim 11, wherein the parameters are modified depending on the historical data.

13. The method as claimed in claim 11 or 12, wherein the parameters are modified depending on data which are received from the device (10) via the data connection between the access device (16) of the user (14) and the device (10).

14. The method as claimed in claim 11, 12 or 13, wherein the historical data are transmitted from the device (10) via the data connection between the access device (16) of the user (14) and the device (10).

## Revendications

1. Procédé pour la connexion d'un utilisateur autorisé (14) à un appareil (10), en particulier à un appareil pour une installation de production d'énergie (20), au moyen d'une passerelle de service (12), une autorisation d'accès de l'utilisateur (14) pour l'appareil (10) étant déposée sur la passerelle de service (12), comprenant les étapes:
- Authentification de l'utilisateur (14) sur la passerelle de service (12),
- Demande d'accès au dispositif par l'utilisateur (14) à la passerelle de service (12) en indiquant un identifiant du dispositif (10),
- comparaison d'un secret d'appareil déposé sur la passerelle de service (12) avec une image du secret d'appareil déposée sur l'appareil (10) et générée en utilisant le secret d'appareil, par l'intermédiaire d'un protocole SRP, la comparaison s'effectuant par l'intermédiaire d'une liaison de données entre un appareil d'accès (16) de l'utilisateur (14) et la passerelle de service (12), ainsi que d'une liaison de données entre l'appareil d'accès (16) de l'utilisateur (14) et l'appareil (10),
- une clé de session étant convenue entre l'appareil (10) et la passerelle de service (12) en cas de comparaison réussie dans le cadre du protocole SRP, et
- un login de l'utilisateur (14) est effectué sur l'appareil (10).

2. Procédé selon la revendication 1, comprenant en outre:
- transmission de la clé de session de la passerelle de service (12) à l'appareil d'accès (16) de l'utilisateur (14), dans la mesure où une autorisation de l'utilisateur (14) est déposée sur la passerelle de service (12), et
- accès de l'utilisateur (14) au dispositif (10) en utilisant la clé de session.

3. Procédé selon la revendication 1 ou 2, dans lequel l'utilisateur (14) détermine l'identifiant du dispositif (10) en l'interrogeant sur le dispositif (10) via la liaison de données entre le dispositif d'accès (16) de l'utilisateur (14) et le dispositif (10).

4. Procédé selon l'une des revendications précédentes, dans lequel une transmission de la clé de session convenue entre la passerelle de service (12) et le dispositif (10) est évitée.

5. Procédé selon l'une des revendications précédentes, dans lequel l'image du secret d'appareil est générée dans le cadre de la fabrication de l'appareil (10) et est déposée sur l'appareil (10), le secret d'appareil étant déposé dans la base de données (DB) de la passerelle de service (12).

6. Procédé selon l'une des revendications précédentes, dans lequel l'image du secret d'appareil est générée dans le cadre d'une mise à jour logicielle de l'appareil (10) à partir d'un secret d'appareil nouvellement généré dans la passerelle de service (12), et dans lequel l'image du secret d'appareil nouvellement généré est déposée sur l'appareil (10) et le secret d'appareil nouvellement généré est lui-même déposé dans la passerelle de service (12), en particulier dans la base de données (DB) de la passerelle de service (12).

7. Procédé selon l'une quelconque des revendications précédentes, dans lequel l'authentification de l'utilisateur (14) comprend une vérification du fait que le nombre de demandes d'accès effectuées dans une période donnée dépasse un nombre maximal.

8. Procédé selon l'une quelconque des revendications précédentes, dans lequel l'authentification de l'utilisateur (14) à la passerelle de services (12) comprend une authentification à deux facteurs de l'utilisateur (14).

9. Procédé selon l'une des revendications précédentes, dans lequel la liaison de données entre le dispositif d'accès (16) de l'utilisateur (14) et la passerelle de service (12) et/ou la liaison de données entre le dispositif d'accès (16) de l'utilisateur (14) et le dispositif (10) est réalisée par une liaison TLS chiffrée et authentifiée en utilisant une suite de chiffrement assurant une Perfect Forward Secrecy.

10. Procédé selon l'une quelconque des revendications précédentes, dans lequel le dispositif (10) est un dispositif (10) pour une installation de production d'énergie (20).

11. Procédé selon la revendication 10, dans lequel le procédé comprend les étapes suivantes après que l'utilisateur (14) se soit connecté avec succès au dispositif (10) :
- Lecture de données historiques de la production d'énergie de l'installation de production d'énergie (20)
- modification de paramètres de la production d'énergie de l'installation de production d'énergie (20).

12. Procédé selon la revendication 11, dans lequel la modification des paramètres est effectuée en fonction des données historiques.

13. Procédé selon la revendication 11 ou 12, dans lequel la modification des paramètres est effectuée en fonction de données reçues par l'appareil (10) via la liaison de données entre le dispositif d'accès (16) de l'utilisateur (14) et l'appareil (10).

14. Procédé selon la revendication 11, 12 ou 13, dans lequel les données historiques sont transmises par l'appareil (10) via la liaison de données entre le dispositif d'accès (16) de l'utilisateur (14) et l'appareil (10).
